(19) Europäisches Patentamt / European Patent Office / Office européen des brevets

(11) **EP 3 152 510 B1**

(12) **FASCICULE DE BREVET EUROPEEN**

(45) Date de publication et mention de la délivrance du brevet:
**08.01.2020 Bulletin 2020/02**

(21) Numéro de dépôt: **15730289.4**

(22) Date de dépôt: **05.06.2015**

(51) Int Cl.:
**F28D 20/00** *(2006.01)*    **F03G 6/06** *(2006.01)*

(86) Numéro de dépôt international:
**PCT/IB2015/054269**

(87) Numéro de publication internationale:
**WO 2015/186107 (10.12.2015 Gazette 2015/49)**

(54) **INSTALLATION DE CONVERSION DE CHALEUR EN ENERGIE MECANIQUE AU REFROIDISSEMENT OPTIMISE PAR UN SYSTEME DE RECUPERATION ET STOCKAGE D'UNE PARTIE DE L'ENERGIE THERMIQUE DU FLUIDE DE TRAVAIL**

ANLAGE ZUR UMWANDLUNG VON WÄRME IN MECHANISCHE ENERGIE MIT OPTIMIERTER KÜHLUNG DURCH EIN SYSTEM ZUR RÜCKGEWINNUNG UND SPEICHERUNG EINES TEILS DER WÄRMEENERGIE DER ARBEITSFLÜSSIGKEIT

FACILITY FOR CONVERTING HEAT INTO MECHANICAL ENERGY WITH OPTIMISED COOLING BY A SYSTEM FOR RECOVERING AND STORING A PORTION OF THE HEAT ENERGY OF THE WORKING FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **05.06.2014 FR 1455124**

(43) Date de publication de la demande:
**12.04.2017 Bulletin 2017/15**

(73) Titulaire: **Commissariat à l'Énergie Atomique et aux Énergies Alternatives 75015 Paris (FR)**

(72) Inventeurs:
- **BOURDON, Delphine F-73000 BARBERAZ (FR)**
- **BRUCH, Arnaud 69560 Saint-Colombe (FR)**
- **COUTURIER, Raphaël F-38360 Sassenage (FR)**

(74) Mandataire: **Nony 11 rue Saint-Georges 75009 Paris (FR)**

(56) Documents cités:
**FR-A1- 2 874 975    US-B1- 7 340 899**

**Description**

Domaine technique

La présente invention concerne un système de récupération et stockage d'une partie de l'énergie thermique (chaleur) disponible sur le circuit de refroidissement du fluide de travail d'une machine thermique pour une installation de conversion de chaleur en énergie mécanique avec une efficacité améliorée par forte chaleur, suivant la revendication 1. et un procédé de fonctionnement d'une telle installation.

Bien que l'invention soit particulièrement adaptée à une centrale solaire à concentration, de par son lieu d'implantation potentiel, comme décrit ci-après, elle peut tout aussi bien être mise en œuvre sur toute installation de conversion de la chaleur en énergie mécanique et en particulier après en électricité utilisant une turbine de détente et donc, un refroidisseur afférent.

Etat de la technique

La technologie solaire thermique à concentration consiste à concentrer le rayonnement solaire à l'aide de miroirs pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants.

Les technologies développées se distinguent par leur méthode de concentration des rayons solaires, de transport (et éventuellement de stockage) de la chaleur (fluides caloporteurs) et de conversion thermodynamique (turbines à vapeur, turbines à gaz, moteurs Stirling).

On distingue typiquement quatre grandes familles de centrales solaires thermique à concentration (encore appelée centrales solaires thermodynamique à concentration ou centrales héliothermodynamiques, d'acronyme anglais CSP pour « *Concentrating Solar Power Plant* ») : les systèmes à collecteurs de forme cylindro-parabolique à foyer linéaire, ceux à concentrateurs linéaires de Fresnel, les systèmes à tour à récepteur central et enfin, les systèmes à paraboles à foyer mobile.

Une centrale CSP est une centrale qui concentre les rayons du soleil à l'aide de miroirs pour chauffer un fluide caloporteur. Ce fluide sert de source chaude à une turbine de détente qui entraine un alternateur afin de produire de l'électricité.

On décrit maintenant un exemple d'une centrale CSP de type cylindro-parabolique déjà installée, notamment en Espagne à Andasol d'une puissance de 50MWe.

Dans cette centrale, l'huile thermique est chauffée dans une zone constituée d'une pluralité de rangées de miroirs de forme cylindro-parabolique regroupés en ce que l'on appelle communément un « champ solaire ».

La chaleur de cette huile est soit stockée dans un fluide de stockage qui est, typiquement dans le cas de ces centrales de type cylindro-parabolique, un mélange de sels de nitrates, soit envoyée dans les échangeurs de chaleur pour produire directement de la vapeur. Cette vapeur est détendue dans une turbine pour produire de l'électricité.

En sortie de turbine de détente, la vapeur est condensée par un aérorefroidisseur utilisant comme source froide l'air extérieur ou de l'eau. La vapeur condensée retourne ensuite dans les échangeurs pour à nouveau être évaporée puis envoyée dans la turbine de détente.

Dans une telle configuration, il peut donc exister deux circuits de fluide distincts, à savoir celui du fluide de travail intégrant la turbine de détente et relié au travers d'échangeurs de chaleur au circuit principal d'huile thermique et celui de refroidissement du condenseur du circuit intégrant la turbine de détente.

Le rendement de la turbine de détente est directement lié à la température d'entrée de la vapeur et la température du point bas du cycle, c'est-à-dire la température au condenseur.

La turbine de détente, en tant qu'organe de conversion thermodynamique, est limitée par le rendement théorique de Carnot selon l'équation $n = 1 - T_{froide}/T_{chaude}$ avec T en Kelvin. Ainsi, le rendement théorique d'une turbine de détente dépend de la température de la source chaude mais aussi de celle de la source froide.

Donc, pour une température chaude donnée qui dépend des récepteurs solaires dans le cas d'une centrale CSP, ou d'une chambre de combustion dans le cas d'une centrale à gaz ou à charbon, plus la température froide (température au condenseur) est élevée, plus le rendement de la turbine de détente baisse.

Dans le cas d'une centrale CSP, l'implantation est réalisée préférentiellement dans une région à fort ensoleillement qui peut donc présenter des températures élevées en journée. Une solution simple pour la source froide est de puiser de l'eau dans une rivière ou dans la nappe phréatique mais c'est une ressource rare dans les régions désertiques ou arides. Les nappes phréatiques sont par exemple quaternaires en Afrique. De plus, même quand elle existe, cette source froide est de plus en plus difficile et chère à exploiter en raison des réglementations environnementales. En outre, le traitement de l'eau puisée est coûteux et nécessite un approvisionnement régulier en produits chimiques.

La publication [1] évoque très largement cette problématique. En particulier, il est investigué dans cette publication quatre lieux d'implantation possible de centrales CSP en Afrique avec les températures moyennes actuelles et prévues dans les années à venir. Il ressort de cette investigation que le réchauffement annoncé de la planète affectera particulièrement les régions déjà considérées chaudes, notamment les lieux d'implantation envisagés pour les centrales CSP.

Dans ces conditions, le besoin en refroidissement de ces centrales CSP risque d'être crucial.

On peut se reporter à la publication [2] dans laquelle une présentation des différentes technologies de refroidissement de centrales de production électrique est réalisée.

Quatre technologies sont majoritairement utilisées dont on décrit brièvement le fonctionnement maintenant.

Les systèmes de refroidissement humide dit « ouvert » prélèvent dans un fleuve ou une mer, un volume d'eau qui réalise le refroidissement de la vapeur dans le condenseur. L'eau est ensuite rejetée en aval du prélèvement, à plus haute température, directement dans le fleuve ou la mer. A titre indicatif, l'ordre de grandeur du volume d'eau requis qui est prélevé est environ égal à 160 litres/kWhe (kiloWatt heure électrique), avec aucune eau évaporée.

Les systèmes de refroidissement humide dit « fermé » permettent de réduire de façon importante les prélèvements d'eau externe car, le refroidissement de l'eau circulant dans ce circuit est lui-même assuré par la présence de tours réfrigérantes. L'eau consommée correspond à l'appoint nécessaire pour maintenir le niveau du circuit fermé constant alors qu'une partie de l'eau est évaporée à travers les tours réfrigérantes. A titre indicatif également, l'ordre de grandeur du volume d'eau requis est de 6 litres/kWhe dont 2 litres/kWhe correspondent à la partie évaporée.

Les systèmes de refroidissement à l'air comportent un circuit supplémentaire, qui est intermédiaire entre le condenseur de la turbine de détente et l'échangeur. La quantité d'eau consommée est diminuée de 95% par rapport aux systèmes de refroidissement humide ouvert, la consommation résiduelle servant aux purges et pour les fuites. A titre d'exemple, une centrale CSP cylindro-parabolique actuellement en service dans le désert de Californie avec un système de refroidissement humide consomme environ 3 litres /kWhe (kiloWatt heure-électrique). Avec un système de refroidissement à air, la consommation est diminuée à une valeur de 3 à 3,4 litres /kWhe, dont 0,75 litre/kWhe pour le nettoyage des miroirs.

Par contre, les inconvénients d'un système de refroidissement à air sont nombreux. En effet, le coût d'investissement est bien supérieur à celui pour les systèmes de refroidissement humide, le bruit généré est important, le rendement est affecté de manière importante lorsqu'il fait, la consommation électrique est importante et enfin, l'emprise au sol est également importante.

Les systèmes de refroidissement dit « hybride » combinent sous diverses formes, un système de refroidissement à air avec aspersion d'eau. L'utilisation d'eau en aspersion permet d'améliorer l'efficacité de l'aérocondenseur lorsqu'il fait chaud dans l'environnement extérieur. La consommation d'eau est inférieure à celle des systèmes de refroidissement humide.

Dans un système de refroidissement sans eau ou avec très peu d'eau, on utilise soit un aérocondenseur dit sec, dans lequel la vapeur provenant de la turbine de détente est condensée, soit un aéroréfrigérant dit sec qui refroidit un fluide de transfert, souvent de l'eau glycolée pour éviter les éventuels gels nocturnes, qui assure la condensation de la vapeur provenant de la turbine à l'intérieur du condenseur.

L'architecture est la même pour les aéroréfrigérants et les aérocondenseurs avec des tuyauteries d'alimentation et de retour de la vapeur ou du fluide de transfert et des ventilateurs qui font circuler l'air ambiant. Les ventilateurs sont agencés à quelques mètres du sol pour laisser un passage d'air suffisant afin ne pas créer de perte de charge et éviter d'aspirer des poussières.

Une possibilité pour le refroidissement d'une centrale CSP est donc d'utiliser un système de refroidissement utilisant directement l'air ambiant comme source froide au travers d'un aérocondenseur sec. Ainsi, dans un tel système, on utilise l'air ambiant pour dissiper la chaleur résiduelle de la turbine de détente qui correspond à environ 65 à 85% de la chaleur produite par les récepteurs solaires suivant le rendement de conversion qui va d'environ 15% pour les turbines de détente des machines thermiques à cycle de Rankine de petites dimensions, jusqu'à environ 35% pour les turbines à vapeur de grandes dimensions. Un système de refroidissement à aérocondenseur sec est mis en oeuvre par exemple par la société Novatec sur des centrales CSP à concentrateurs linéaires de Fresnel.

Comme déjà évoqué, l'avantage principal d'un tel système est l'économie en eau. Les inconvénients majeurs sont le coût en énergie consommée qui est dédiée à l'alimentation électrique des ventilateurs et, la perte de rendement de la centrale lorsque la température de l'air extérieur dépasse 30 à 35°C.

Le passage d'un système de refroidissement humide à un système de refroidissement à air représente une perte équivalente à 3% de l'énergie électrique annuelle produite en Espagne, et à une valeur de 5 à 10% en Afrique du Nord, selon la publication [1].

Une autre source d'information estime, quant à elle, à 10% le surcoût de production électrique pour un système de refroidissement à air, et à 7% de perte de l'énergie produite: publication [3].

Un système de refroidissement hybride permet de limiter à 1% la perte d'énergie produite pour une consommation d'eau de l'ordre de 50% de celle d'un système humide.

La pénalité induite par un système de refroidissement avec aérocondenseur sec, c'est-à-dire la perte d'énergie produite due à son fonctionnement, est la plus importante en journée lorsqu'il fait très chaud à l'extérieur, ce qui correspond malheureusement aux périodes de fort ensoleillement, donc de fortes productions électriques, et donc de forts besoins de refroidissement au condenseur de la turbine de détente.

Une des solutions envisageables pour évacuer la pleine puissance thermique au condenseur de la machine thermique de conversion de la chaleur en électrique, dans des cas de température extérieure très élevée, est de surdimensionner les aéro-condenseurs à air, c'est-à-dire installer des appareils calibrés pour évacuer cette pleine puissance thermique dans le cas le plus extrême correspondant aux températures élevées les plus extrêmes. Les inconvénients majeurs de cette solution sont le coût d'investissement très conséquent et la consommation électrique des ventilateurs toute l'année alors que les moments où il fait très chaud sont limités en temps.

D'autres systèmes de refroidissement des condenseurs des machines de conversion électrique des centrales solaires sont actuellement envisagés, même s'ils restent plus aujourd'hui encore à l'état d'étude et/ou de prototype. On peut citer l'exemple de systèmes basés sur l'utilisation d'un fluide caloporteur dessicant entre le condenseur et l'air ambiant : voir publication [4]. Ce type de système présente des performances supérieures à celles de systèmes classiques de refroidissement à l'air et permet une fonction naturelle de stockage basée sur le principe d'un fluide dessicant et les variations de température de l'air extérieur.

Par ailleurs, d'autres systèmes de refroidissement ont déjà été proposés.

Ainsi, la demande de brevet US 2009/0158736 propose un système où l'on utilise le sol comme source froide, un échangeur étant alors noyé dans le sol. Les inconvénients du système divulgué sont nombreux, et on peut les énumérer comme suit :

- des longueurs de tuyauterie importantes sont nécessaires pour assurer l'échange de chaleur avec le sol, ce qui représente un coût financier et énergétique et induit une maintenance importante,
- le transfert de chaleur est peu performant,
- la régénération thermique du sol, c'est à dire le retour du sol à une configuration thermique initiale, avant l'échange de chaleur, n'est pas assurée en raison de la faible conductivité thermique du sol. Dans ce cas, l'efficacité de la source froide que représente le sol tend à se dégrader au fur et à mesure de son utilisation.

Du brevet US4054246, on connaît en outre des systèmes qui stockent la chaleur du soleil pendant l'été ou le froid du sol dans un lit de roches agencé sous une habitation.

Au lieu de réaliser des systèmes de refroidissement des condenseurs des machines thermiques de conversion électrique, d'autres solutions consistent plutôt à évacuer une partie de l'énergie thermique de la turbine de détente, i.e. en amont du condenseur.

La publication [5] envisage ainsi un système qui combine une machine à absorption pour la production de froid, un stockage de fluide froid puis la restitution du froid stocké à l'air en entrée d'aérocondenseur par l'intermédiaire d'un échangeur. Le système de refroidissement envisagé présente plusieurs inconvénients majeurs que l'on peut résumer ainsi :

- le système est particulièrement complexe puisqu'il couple plusieurs composants et machines,
- la consommation d'énergie électrique est particulièrement élevée dans la mesure où la machine à absorption et les circuits ajoutés doivent tous être alimentés,
- la mise en place d'un tel système nécessite un grand volume de stockage.

La publication [6] propose quant à elle un stockage par matériau à changement de phase (d'acronyme MCP en français ou PCM en anglais) pour décaler l'évacuation d'une partie de la puissance thermique de la turbine de détente. Le stockage proposé est cher de réalisation et compliqué à mettre en œuvre, notamment de par l'ajout d'un échangeur supplémentaire.

Le brevet US 7340899 B1 décrit une centrale solaire thermique avec un circuit de refroidissement de la machine thermique qui comprend deux réservoirs en série, un réservoir de stockage d'eau chaude et un réservoir de stockage d'eau froide. Dans ce brevet, le réservoir de stockage d'eau chaude est dimensionné pour temporairement stocker le fluide de refroidissement une fois que ce dernier a refroidi le fluide de travail. Lorsque le fluide de refroidissement a atteint une température suffisamment basse pour circuler à nouveau dans le condenseur de la machine thermique, alors il peut être transféré dans le réservoir d'eau froide. Le système de refroidissement divulgué consiste donc à stocker tout le fluide de refroidissement d'abord dans le réservoir chaud puis celui froid, ce qui implique un dimensionnement très important des réservoirs de stockage qui peut être rédhibitoire en termes de coût et/ou de capacité d'installation. En outre, même avec un dimensionnement très important, il n'est pas certain que les réservoirs divulgués puissent évacuer un surplus de puissance thermique (chaleur) produit par la machine. D'ailleurs, ce brevet US 7340899 B1 est silencieux quant à la solution apportée à ce problème d'évacuation de surplus de chaleur. Le document US 7 340 899 B1 décrit une installation de conversion de chaleur en énergie mécanique suivant le préambule de la revendication 1.

Ainsi, il existe un besoin pour améliorer le rendement du système de refroidissement du condenseur d'une installation de conversion de chaleur en électricité, en cas de températures extérieures très élevées. En d'autres termes, il existe un besoin pour maintenir les performances nominales d'un condenseur d'une installation de conversion de chaleur en électricité, en cas de températures extérieures très élevées.

Plus généralement, il existe un besoin pour améliorer le rendement d'une installation de conversion de chaleur en énergie mécanique et en particulier après en électricité, en particulier d'une centrale solaire thermodynamique (CSP) intégrant une telle installation, en cas de températures extérieures très élevées.

Le but général de l'invention est de répondre au moins en partie à ce(s) besoin(s).

Exposé de l'invention

Pour ce faire, l'invention a tout d'abord pour objet, selon un aspect, une installation de conversion de chaleur en énergie suivant la revendication 1.

Autrement dit, l'invention a pour objet une installation de conversion de chaleur en énergie mécanique comprenant :

- une machine thermique apte à faire subir à un fluide de travail un cycle thermodynamique,
- un dispositif de refroidissement comprenant :

  • un circuit de refroidissement apte à permettre la circulation d'un fluide de refroidissement,
  • un moyen de refroidissement par ventilation forcée ou air pulsé (aérotherme) permettant de refroidir le fluide de refroidissement réchauffé par le fluide de travail de la machine thermique,
  • un réservoir de matériau de stockage thermique par chaleur sensible,
  • le réservoir étant conçu pour stocker une partie de la chaleur évacuée par le circuit de refroidissement du fluide de travail et le réservoir étant conçu pour réémettre cette partie de la chaleur dans le circuit de refroidissement du fluide de travail de la machine thermique lors des heures où la température extérieure est la plus froide afin d'évacuer la chaleur stockée.

Selon un mode de réalisation avantageux, l'invention concerne une installation de conversion de chaleur en électricité comprenant :

- une machine thermique apte à faire subir à un fluide de travail un cycle thermodynamique dit de Rankine, la machine thermique comprenant une turbine de détente de vapeur,
- un réservoir de matériau de stockage thermique par chaleur sensible, en tant que moyen de stockage d'une partie de la chaleur évacuée par le circuit de refroidissement de la turbine, le réservoir étant apte à réémettre cette partie de la chaleur dans le circuit de refroidissement du fluide de travail de la machine thermique lors des heures où la température extérieure est la plus froide afin d'évacuer la chaleur stockée.

Selon un mode de réalisation avantageux, la machine thermique est une machine à cycle organique de Rankine (ORC). Tout comme la publication [6] qui envisage un stockage de chaleur pour décaler l'évacuation d'une partie de l'énergie thermique de la turbine de détente, l'invention propose également de stocker une partie de l'énergie thermique en cas de fortes chaleurs. Mais, contrairement à cette publication, le stockage selon l'invention par chaleur sensible est simple à réaliser et facile à mettre en œuvre et d'autre part il se fait sur le circuit de refroidissement du fluide de travail et non pas sur le fluide de travail lui-même.

Le moyen de stockage selon l'invention permet de stocker de la chaleur trop importante évacuée par la turbine pendant les quelques heures par jour où la température extérieure est trop élevée afin d'assurer un rendement suffisant de l'échangeur de chaleur refroidi à l'air (en particulier un aérocondenseur ou un aéroréfrigérant) qui assure le refroidissement du fluide de travail, et de déstocker cette chaleur lorsque l'échangeur de chaleur est moins sollicité car la production de vapeur et donc électrique est moindre et que parallèlement la température extérieure permet une évacuation facilitée de la chaleur.

L'échangeur de la machine thermique peut être dimensionné comme usuellement voire sous-dimensionné par rapport aux machines thermiques existantes. Son coût de fonctionnement s'en trouve ainsi diminué et le rendement global de l'installation de conversion en électricité et donc d'une centrale solaire CSP est augmenté.

L'invention, mise en place sur un circuit de refroidissement intermédiaire en eau, peut permettre d'utiliser, en tant qu'aérocondenseur/aéroréfrigérant de refroidissement du condenseur de la machine thermique, aussi bien un aérocondenseur/aéroréfrigérant sec qu'un aérocondenseur/aéroréfrigérant humide, même si la mise en œuvre sur un aérocondenseur/aéroréfrigérant sec permettrait de compenser tout ou partie de la baisse actuelle de rendement de centrale lié à la surconsommation électrique des ventilateurs des aérocondenseurs/aéroréfrigérants secs et aux pics de température extérieures.

Autrement dit, l'invention permet d'augmenter le rendement de conversion d'une installation de conversion de chaleur en électricité, lors de périodes de fortes voire très fortes chaleurs, avec un coût raisonnable.

L'invention peut être mise en œuvre avantageusement, dans des régions à très fortes chaleurs la journée, généralement des zones à climat aride, et à faibles températures la nuit.

Plus particulièrement, les zones potentielles d'implantation de centrales solaires CSP sont celles, notamment dans les climats arides semi désertiques à ciel majoritairement clair, dans lesquelles la différence de température entre jour et nuit est importante en toute saison.

Par exemple, dans la région de Ouarzazate, dans laquelle des construction de centrales solaires CSP ont été réalisées, on observe que l'écart moyen de température entre le jour et la nuit est de 15 à 20°C, et cet écart reste présent même les jours les plus chauds de l'année.

Selon l'invention, cet écart de température entre le jour et la nuit peut être mis à profit afin de stocker une partie de la chaleur évacuée par la turbine pendant les heures les plus chaudes de la journée et de la restituer aux heures les plus froides de la nuit au circuit de la machine thermique, ce qui permet à l'aérocondenseur/aéroréfrigérant de fonctionner dans son régime nominal à toute heure et donc ne nuit pas à son rendement.

Avantageusement, le réservoir de matériau de stockage est réalisé sous la forme d'un stockage liquide dit « thermocline », celui-ci pouvant avantageusement être réalisé grâce à une fosse dans le sol, la fosse étant reliée au circuit de refroidissement du fluide de travail de la machine thermique par au moins un circuit de fluides. On précise ici qu'un stockage liquide thermocline est un réservoir unique dans lequel un liquide est présent avec une zone chaude, une zone froide et une zone intermédiaire de faible volume qui est la zone appelée « thermocline » dans laquelle s'établit une stratification thermique au sein du réservoir.

La fosse à réaliser pour constituer le réservoir de stockage de la chaleur selon l'invention peut être réalisée lors de la construction d'une nouvelle installation. Elle peut également être réalisée dans une installation existante.

Le stockage liquide par thermocline peut également être avantageusement réalisé sous la forme d'un lit fluidisé stabilisé par un lit de roches. Dans ce cas, le stockage de chaleur selon l'invention est donc effectué à la fois dans le liquide caloporteur et dans un lit de roches. Pour l'application de l'invention à une centrale solaire, le stockage dans un lit de roches est avantageux car les roches peuvent être présentes in situ sur le lieu de la centrale et ce de manière abondante. D'autres matériaux de stockage par chaleur sensible peuvent convenir seuls ou en combinaison avec un stockage liquide thermocline. De manière générale, on peut envisager des matériaux peu chers et disponibles, tels que des rebuts de céramiques, de briques, de roulement à billes usagés.

Selon une caractéristique avantageuse de l'invention, le fluide caloporteur du circuit de refroidissement est simplement de l'eau. Selon l'état de l'art, on utilise en général de l'eau glycolée en tant que fluide caloporteur des circuits de refroidissement car le glycol permet d'éviter le gel nocturne. La chaleur stockée selon l'invention permet d'utiliser simplement de l'eau en lieu et place de cette eau glycolée, car la chaleur stockée permet d'éviter également le gel nocturne.

Selon une variante avantageuse, la fosse est en forme de pyramide tronquée avec la base agencée le plus profond dans le sol. Cette forme de pyramide tronquée permet avantageusement de réduire la profondeur de la fosse pour un même volume.

L'invention a également pour objet un procédé de fonctionnement de l'installation décrite précédemment, selon lequel on réalise les étapes suivantes :

    i/ lors de la nuit, échange de chaleur entre le réservoir de stockage thermique et le circuit de refroidissement du fluide de travail de la machine thermique,
    ii/ lors de la journée, en cas de puissance évacuée par le fluide de travail inférieure à une valeur seuil prédéterminée, isolation fluidique du réservoir,
    iii/ lors de la journée, en cas de puissance évacuée par le fluide de travail supérieure à une valeur seuil prédéterminée, échange de chaleur entre le circuit de refroidissement du fluide de travail de la machine thermique et le réservoir de stockage thermique afin de stocker une partie de la chaleur évacuée par le fluide de travail dans le réservoir.

L'invention concerne également une centrale solaire thermodynamique (CSP), comprenant une installation décrite précédemment. Plus généralement, l'invention concerne, toute installation de production électrique par conversion de chaleur et qui fonctionne en pays chaud et dont le rendement est fonction de la température extérieure.

L'invention concerne enfin l'utilisation d'une installation décrite précédemment dans une région où l'écart de température extérieure entre la nuit et la journée est au moins égal à 10°C.

Description détaillée

D'autres avantages et caractéristiques de l'invention ressortiront mieux à la lecture de la description détaillée de l'invention faite à titre illustratif et non limitatif en référence aux figures suivantes parmi lesquelles :

- la figure 1 est une vue schématique générale d'une centrale solaire CSP déjà exploitée par la demanderesse;
- la figure 2 est une vue schématique simplifiée de la centrale CSP selon la figure 1 ;
- la figure 3 est une vue schématique simplifiée d'une centrale CSP avec un exemple de système d'évacuation de la chaleur de la turbine selon l'invention lors d'une phase de stockage de cette chaleur dans un réservoir;;
- la figure 4 est une vue schématique simplifiée d'une centrale CSP avec un exemple de système d'évacuation de la chaleur de la turbine selon l'invention lors d'une phase de déstockage de cette chaleur;
- la figure 5 est une vue schématique en coupe d'un exemple avantageux de réservoir de stockage d'une partie de la puissance thermique évacuée par la turbine de machine thermique, selon l'invention.
- la figure 6 est un graphe indiquant les courbes caractéristiques de puissance délivrée par la centrale CSP selon l'état de l'art, illustrée aux figures 1 et 2, ces courbes ayant été réalisées au cours d'une journée d'été et de grande chaleur;
- la figure 7 reprend les courbes caractéristiques de puissance délivrée par la centrale CSP selon la figure 6 et montre un premier mode de fonctionnement du système selon l'invention ;
- la figure 8 reprend les courbes caractéristiques de puissance délivrée par la centrale CSP selon la figure 6 et montre un deuxième mode de fonctionnement du système selon l'invention.

Dans la description qui va suivre les termes « entrée », « sortie » « amont », « aval », sont utilisés par référence avec la direction de circulation des fluides au sein d'une installation selon l'invention.

Les termes « dessus », « dessous », « inférieur », « supérieur » sont quant à eux à considérer par référence à l'implantation dans le sol d'un réservoir de stockage de chaleur selon l'invention.

Par souci de clarté, les mêmes éléments dans une installation 3 selon l'état de l'art et une installation 3 selon l'invention sont désignés par les mêmes références numériques.

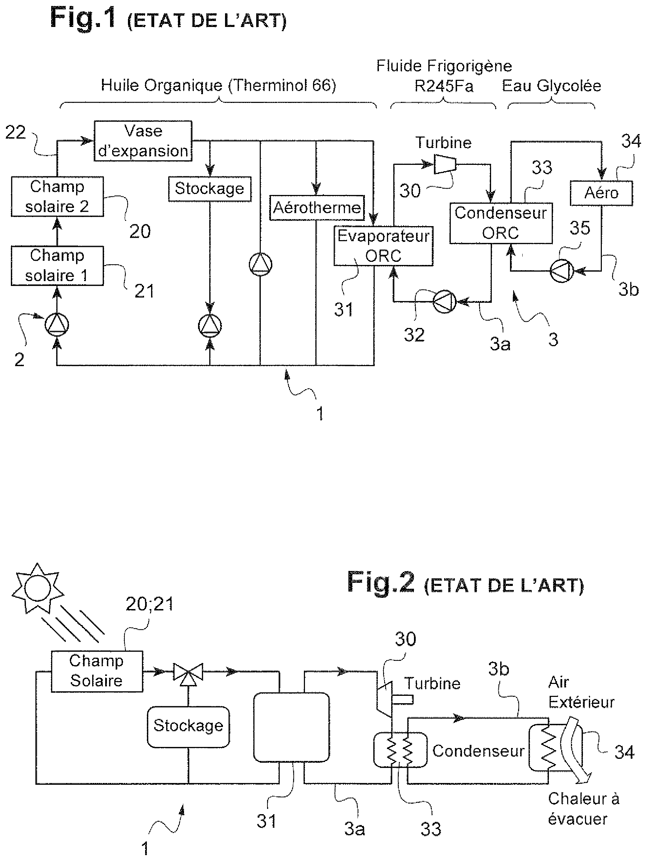

La centrale solaire thermodynamique (CSP) 1 qui est représentée schématiquement en figure 1 est une centrale-prototype et est déjà exploitée par la demanderesse.

Nous ne décrirons pas ici en détail la partie 2 de la centrale 1 qui réalise la production de chaleur à proprement parler. En substance, cette partie 2 comprend deux groupes de pluralités de miroirs cylindro-paraboliques formant ce que l'on désigne usuellement des champs solaires 20, 21. Le fluide caloporteur, qui comme indiqué sur la figure 1 est de l'huile, circule dans un circuit 22 qui apporte son énergie à une installation 3 de conversion de la chaleur de l'huile en électricité qui concerne plus spécifiquement l'invention.

Plus précisément, la machine thermique 3 de conversion électrique est une machine fonctionnant selon un cycle thermodynamique dit Cycle Organique de Rankine (acronyme anglais ORC).

Cette machine 3 comprend tout d'abord un circuit principal 3a avec une turbine de détente 30 permettant la production électrique à partir de la vapeur, un évaporateur 31 pour récupérer de l'énergie de chaleur issue du circuit 22 et vaporiser le fluide de travail, qui est un fluide frigorigène dans l'exemple illustré de la figure 1, pour l'envoyer en aval vers la turbine 30 par l'intermédiaire d'une pompe 32 qui met en circulation le fluide de travail dans le circuit 3a.

Un condenseur 33 est prévu en aval de la turbine 30: sa fonction est d'évacuer, par condensation, l'énergie non transformée par la turbine 30.

La condensation est rendue possible dans le condenseur 33 par un circuit de refroidissement 3b dédié dans lequel circule un liquide de refroidissement, aussi appelé fluide de transfert, qui est de l'eau glycolée dans l'exemple illustré de la figure 1. L'eau glycolée est finalement refroidie au moyen d'un aéroréfrigérant sec 34 qui intègre un ventilateur lui amenant de l'air extérieur. La circulation du liquide de refroidissement dans le circuit 3b est assurée au moyen d'une pompe 35.

Au lieu d'avoir un circuit supplémentaire 3b avec un fluide de transfert dédié comme montré en figures 1 et 2 , on peut aussi avoir un seul circuit de refroidissement 3a le condenseur 33 et l'aéroréfrigérant 34 constituant alors un seul et même composant, qui est un aérocondenseur sec, dans lequel la vapeur provenant de la turbine de détente est directement condensée.

Par « aérocondenseur », on entend ici et dans le cadre de l'invention, un échangeur de chaleur dans lequel un fluide sous forme vapeur, circule et est condensé avec l'air ambiant pulsé par un ventilateur.

Par « aéroréfrigérant », on entend un échangeur de chaleur dans lequel un fluide liquide ou gazeux est refroidi par un courant d'air extérieur pulsé par un ventilateur.

Après consultation des profils annuels typiques de température sur le site d'implantation de cette centrale 1 CSP et des besoins usuels de refroidissement de la machine thermique 3 ORC, l'aéroréfrigérant 34 a été dimensionné lors de la construction pour une puissance donnée environ à une température extérieure de 25°C. Les cas de température d'air extérieur de 30°C et 35°C ont été respectivement considérés comme peu fréquents et rares et n'ont donc pas été initialement retenus comme dimensionnant.

Or, finalement, comme ont pu le constater les inventeurs, le besoin de refroidissement de la machine thermique 3 ORC s'est avéré supérieur à celui initialement prévu et les occurrences de température d'air extérieur supérieur à 30°C plus importantes qu'envisagées.

Ainsi, de ce fait, il a été constaté que l'aéroréfrigérant 34 installé était sous-dimensionné pour les heures les plus chaudes en été, lorsque la machine thermique 3 ORC tourne à plein régime. Ceci a pour conséquence contraignante d'obliger l'équipe exploitante à défocaliser certaines lignes de miroirs des champs solaires 20, 21, c'est-à-dire à changer leur orientation de sorte à ne pas concentrer les rayons de soleil sur ces parties de champ solaires 20, 21 aux périodes les plus chaudes. Cela conduit donc à dégrader le rendement de production électrique de la centrale 1, puisque le plein potentiel des champs solaires 20, 21 n'est pas rendu disponible à ces moments. La production électrique effective de la machine thermique 3 ORC est alors réduite en comparaison de la production électrique théorique maximale, cette dernière correspondant au maximum de la production électrique possible au vu de la seule ressource solaire disponible.

Pour répondre à cette problématique de perte de rendement de la centrale solaire 1 CSP aux heures très chaudes, qui est induite par la perte de rendement de l'aéroréfrigérant 34 directement alimenté par l'air extérieur, les inventeurs ont pensé à réaliser un système de stockage d'une partie de la chaleur évacuée par la turbine 30 lors des heures les plus chaudes.

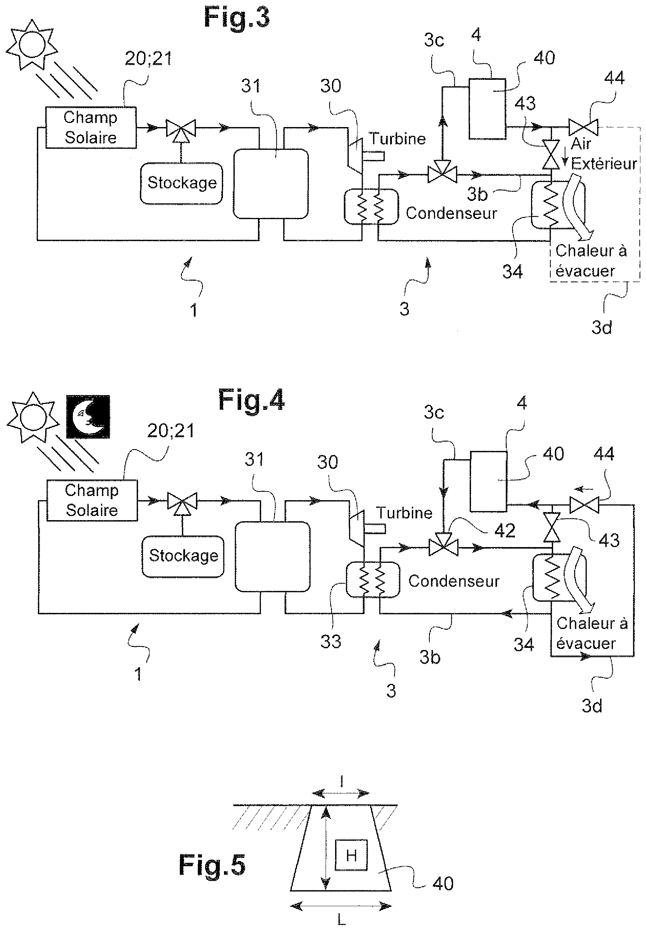

Comme illustré aux figures 3 et 4, ce système 4 comprend un réservoir de stockage consistant en un réservoir de stockage liquide par thermocline sous la forme d'un lit fluidisé stabilisé dans un lit de roches 40 pour stocker ladite partie de chaleur de turbine 30 aux heures les plus chaudes, afin de la restituer aux heures les plus froides par l'intermédiaire des circuits 3c, 3d au circuit du fluide de travail 3a de la machine thermique 3.

Ainsi, le circuit 3c, 3d est un circuit de refroidissement supplémentaire, dérivé du circuit de refroidissement principal 3b.

Dans ce système 4, le stockage de chaleur selon l'invention est avantageusement réalisé à la fois dans le liquide caloporteur et dans le lit de roches. Avec un tel système 4 de stockage, le liquide caloporteur peut alors être simplement de l'eau alors que dans les systèmes de refroidissement selon l'état de l'art, il est nécessaire d'avoir du glycol ajouté dans de l'eau pour éviter le gel nocturne. Autrement dit, la chaleur stockée selon l'invention peut permettre d'éviter l'utilisation de glycol comme selon l'état de l'art.

Plus précisément, comme illustré en figure 3, lorsque la puissance thermique évacuée par la machine thermique est au-dessous d'une valeur seuil prédéterminée, au moins la vanne 42 est dans sa position fermée.

Lorsque la puissance thermique évacuée par la turbine 30 est supérieure à une valeur seuil prédéterminée, ce qui correspond aux heures les plus chaudes d'une journée d'été, alors on actionne le système de vannes 42 pour permettre la circulation d'une partie du flux de chaleur dans le circuit 3c et donc dans le réservoir de stockage 40 prévu à cet effet. L'autre partie du flux de chaleur évacué par la turbine 30 est évacuée par l'aéroréfrigérant 34 comme usuellement. Au cours du stockage, la vanne 43 est ouverte et la vanne 44 est fermée. Dans sa position ouverte, la vanne 43 permet de connecter fluidiquement la sortie du réservoir de stockage 40 à l'entrée de l'aéroréfrigérant 34 par le circuit 3c. Ainsi, on stocke dans le réservoir 40 la partie de la puissance thermique en surplus de la valeur seuil prédéterminée, tout en laissant passer le fluide de refroidissement du circuit supplémentaire de refroidissement 3c à celui principal 3b.

-Comme illustré en figure 4, lorsqu'on souhaite déstocker la chaleur stockée dans le réservoir 40, on ouvre la vanne 42, on ferme la vanne 43 et on ouvre la vanne 44. Dans sa position ouverte, la vanne 44 permet de relier la sortie du réservoir de stockage 40 et la sortie de l'aéroréfrigérant 34 par le circuit 3d. Le fluide circulant dans le circuit 3b peut alors circuler dans le circuit 3d vers le réservoir 40 qui réémet sa chaleur stockée en amont de la turbine 30. Ainsi, on peut réémettre depuis le réservoir 40 la partie de la chaleur évacuer la chaleur stockée en son sein dans le circuit de refroidissement principal 3b.

Dans certaines configurations pour les phases de stockage et du déstockage de la chaleur dans/depuis le réservoir 40, la pompe 35 dédiée initialement à la circulation du fluide de refroidissement dans le circuit 3b suffit à elle seule faire circuler le fluide à travers les circuits 3c, 3d et le réservoir 40. Si nécessaire, on peut envisager l'ajout d'une ou plusieurs autre(s) pompe(s) pour réaliser cette circulation.

Comme visible en figure 3, le sens de circulation du fluide de refroidissement permet de charger thermiquement le réservoir unique 40 en amenant le fluide dans la partie chaude du réservoir et le poussant vers sa partie froide.

A contrario, comme visible en figure 4, le sens le sens de circulation du fluide de refroidissement permet de décharger thermiquement le réservoir unique 40 en amendant le fluide de refroidissement dans la partie froide et en le poussant vers sa partie chaude.

Une configuration selon les figures 3 et 4 permet de bénéficier des circuits déjà installés pour le déstockage de la chaleur la nuit mais à des fins d'augmentation de la production d'électricité, comme celui de la figure 1.

Une configuration selon la figure 4 permet d'isoler complètement le circuit 3c dédié ainsi uniquement à l'évacuation de la partie de la chaleur de la turbine 30.

Comme montré en figure 5, le lit de roches est de préférence réalisé dans une fosse 40. Sur cette figure 5, la forme préférée de la fosse 40 est également montrée : la fosse 40 est en forme de pyramide tronquée avec la base agencée le plus profond dans le sol.

La réalisation du lit de roches 4 dans une fosse 40 enterrée n'est pas obligatoire, et on peut prévoir dans toute installation 3, tout type de réservoir 40 approprié qui peut stocker une partie de la chaleur évacuée par la turbine de détente 30 lors des heures les plus chaudes, afin de la restituer lors de la nuit par échange avec le circuit 3a de la machine thermique 3. De manière préférée, on choisit un réservoir unique de stockage liquide par thermocline.

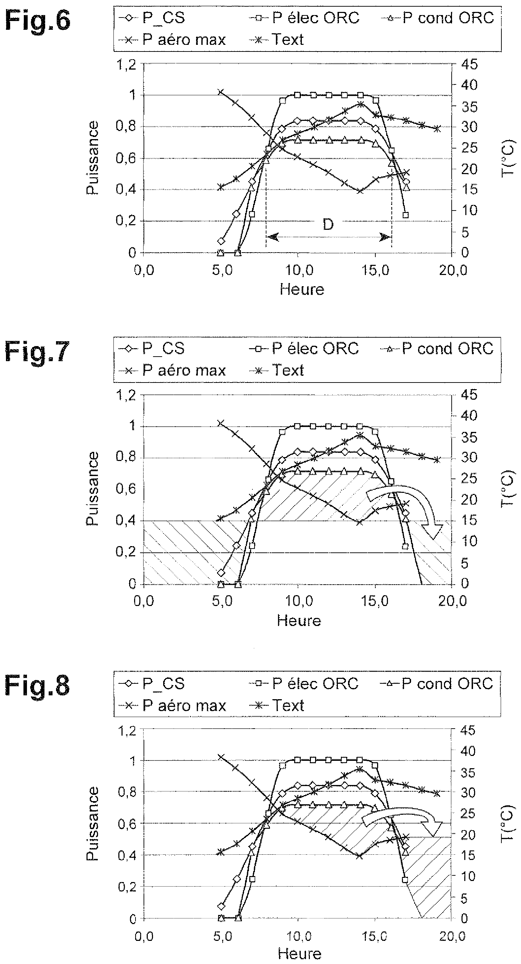

La figure 6 illustre une situation typique qui s'est produite pendant une journée d'été sur le prototype de centrale solaire 1, tel qu'illustré en figure 1.

Sur cette figure 6, sont représentées les grandeurs suivantes:

- « Text » : température de l'air extérieur, en °C ;
- « P_CS » : puissance maximale en kW récupérable sur le champ solaire 20, 21 à un moment donné. Cette grandeur est indépendante du fonctionnement de la machine 3 ORC et de l'aéroréfrigérant 34;
- « Pelec ORC » : puissance électrique délivrée par la machine 3 ORC sur la base de P_CS et d'un aéroréfrigérant 34 non limité. Cette valeur correspond donc à la puissance électrique maximale qu'il est possible de générer à un moment donné;
- « $P_{cond\ ORC}$ » : puissance qu'il est nécessaire de dissiper au condenseur 33 de la machine 3 ORC lorsque celle-ci est alimentée avec P_CS à son évaporateur 31 ;
- « Paéro max » : puissance maximale de l'aéroréfrigérant 34 en fonction des conditions de température extérieure.

On précise ici que les puissances indiquées « P_CS » et « $P_{cond\ ORC}$ » ont été adimensionnées avec la valeur de la puissance maximale théorique récupérable sur le champ solaire 20, 21. La puissance « Pélec ORC » a quant à elle été adimensionnée avec la valeur de la puissance électrique théorique maximale produite par la machine 3 ORC.

Comme on peut le voir sur la figure 6, durant la journée d'été , la température extérieure dépasse les 35°C en milieu de journée et la puissance amenée à la machine 3 approche la valeur nominale. Dans ces conditions, l'aéroréfrigérant 34 qui a été initialement installé et qui est alimenté directement par l'air extérieur est clairement insuffisant pour répondre aux besoins de refroidissement de la machine 3, car Paéromax<PcondORC.

Autrement dit, pendant la période D représentée en figure 6, la puissance qui peut être évacuée par le condenseur 33 est inférieure à la puissance effectivement requise, en raison des températures trop élevées. Comme déjà évoqué, la seule solution actuelle pour éviter l'arrêt de la machine 3 suite à un refroidissement insuffisant du condenseur 33 est de défocaliser les miroirs des champs solaires 20, 21 pour diminuer l'apport de chaleur Pcs à la machine 3. De ce fait, on constate que la production électrique effective tombe alors à 59% de la production électrique potentielle.

La puissance thermique qu'un aéroréfrigérant 34 peut évacuer s'exprime selon la loi suivante :

$$Pth = K*S*\Delta T$$

Avec Pth : puissance thermique échangeable en W ;
K : coefficient de transmission surfacique moyen (en W/m²/K) ;
S : surface d'échange en m²;
$\Delta T$: Ecart moyen de température entre fluide chaude et froid (en K)

Ainsi, selon l'invention, lorsque le surplus de chaleur évacué par la turbine 30 ne peut plus l'être par l'aéroréfrigérant 34, on stocke celle-ci dans le matériau 40 de stockage thermique par chaleur sensible, c'est-à-dire aux heures les plus chaudes de la journée, et on évacue cette puissance stockée aux heures les plus froides, en fin de journée ou au cours de la nuit.

De manière générale, le procédé de fonctionnement du système selon l'invention comporte les étapes suivantes :

i/ lors de la nuit, échange de chaleur entre le réservoir de stockage thermique 40 et le circuit de fluide de travail 3a de la machine 3 par le biais du circuit 3b,
ii/ lors de la journée, en cas de puissance évacuée par le fluide de travail inférieure à une valeur seuil prédéterminée, isolation fluidique du réservoir 40,
iii/ lors de la journée, en cas de puissance évacuée par le fluide de travail supérieure à une valeur seuil prédéterminée, échange de chaleur entre le circuit de fluide de travail 3a de la machine 3 et le réservoir de stockage thermique 40 par le biais du circuit 3b, afin de stocker une partie de la chaleur évacuée par le fluide de travail dans le réservoir 40.

Deux modes de fonctionnement peuvent être envisagés.

En cas de puissance thermique fournie par la turbine 30 supérieure à une valeur limite prédéterminée, alors le surplus de puissance est envoyé dans le réservoir 40 de stockage thermique. Lorsque la puissance fournie par la turbine 30 devient inférieure à cette valeur limite prédéterminée, alors la chaleur du réservoir 40 peut être évacuée par l'aéroréfrigérant 34. Ces différentes périodes respectivement de stockage de surplus de puissance de la turbine 30 et de déstockage du réservoir 40 sont montrées en tant que zones hachurées sur la figure 7.

Selon un deuxième mode, on fixe la puissance électrique de l'aéroréfrigérant 34. La puissance maximale évacuable par l'aéroréfrigérant est variable au cours de la journée : elle est maximale lorsque les températures extérieures sont basses, et minimale lors des périodes de chaleur et de fort ensoleillement.

De la même façon que précédemment, lorsque la puissance thermique fournie par la turbine 30 est supérieure à une valeur limite prédéterminée, alors le surplus de puissance est envoyé dans le réservoir 40 de stockage thermique. Lorsque la puissance fournie par la turbine 30 devient inférieure à cette valeur limite prédéterminée, alors la chaleur du réservoir 40 peut être évacuée par l'aéroréfrigérant 34. Les zones hachurées en figure 8 montrent également le stockage et de déstockage du surplus de puissance thermique de la turbine 30.

Le premier mode (puissance thermique limite prédéterminée) permet de diminuer les consommations électriques des aéroréfrigérants, surtout en dehors des périodes de production électrique.

D'après la publication [1], l'aéroréfrigérant est classiquement dimensionné de telle façon que les 1% des heures les plus chaudes de l'année ne sont pas prises en compte, c'est-à-dire que l'aéroréfrigérant est sous-dimensionné pour ces 1% d'heures les plus chaudes et que la centrale fonctionnera forcément en régime dégradé à ces heures. Dans le cas d'étude ici considéré, cela correspond à peu près à un dimensionnement pour une température extérieure de 35°C. Un tel dimensionnement est avantageux dans la mesure où il permet de minimiser les coûts d'investissement des aérocondenseurs/aéroréfrigérants de centrale CSP ainsi que leur coût de fonctionnement annuel.

L'inconvénient majeur est l'obligation de faire fonctionner les aérocondenseurs/aéroréfrigérants en régime dégradé pendant les périodes de très fort ensoleillement, ce qui pénalise le rendement de production électrique de la centrale CSP et donc sa rentabilité.

L'invention qui vient d'être décrite permet de conserver voire minimiser le dimensionnement usuel des aérocondenseurs/aéroréfrigérants sans que cela ne nuise au rendement de production d'une centrale CSP.

D'autres variantes et améliorations peuvent être prévues sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

L'expression « comportant un » doit être comprise comme étant synonyme de « comportant au moins un », sauf si le contraire est spécifié.

## Références citées

[1]: Kevin Damerau and al. « Costs of reducing water use of concentrating solar power to sustainable levels: Scénarios for North Africa », Energy Policy, 2011

*[2]:* «Comparison of alternate cooling technologies for california power plants, Economies, environmental and other tradeoffs», California Energy Commission, Février 2002

[3]: « Realising the potential of concentrating solar power in Australia », IT power, Mai 2012

[4]: C. Martin and al. « Novel Dry Cooling Technology for Power Plants », SunShot Concentrating Solar Program Review 2013

[5]: V.Gadhamshetty and al. « Improving Air-Cooled Condenser Performance in Combined Cycle Power Plants », Journal of Energy Engineering ASCE, Août 2006

[6]: Lorenzo Pistocchini and al. « Feasability Study of $\alpha$n Innovative Dry-Cooling System with Phase-Change Material Storage for CSP Multi-MW Size Power Plant », Journal of Solar Energy Engineering, Août 2011

## Revendications

1.  Installation (1) de conversion de chaleur en énergie mécanique, **caractérisée en ce qu'**elle comprend :

    - une machine thermique (3) apte à faire subir à un fluide de travail un cycle thermodynamique,
    - un réservoir (4, 40) de matériau de stockage thermique par chaleur sensible, en tant que moyen de stockage d'une partie de la chaleur évacuée par le circuit de refroidissement du fluide de travail, le réservoir étant apte à réémettre cette partie de la chaleur dans le circuit (3a) de refroidissement du fluide de travail de la machine thermique lors des heures où la température extérieure est la plus froide afin d'évacuer la chaleur stockée.

2.  Installation (1) selon la revendication 1, l'installation étant une installation de conversion de chaleur en électricité comprenant :

    - une machine thermique (3) apte à faire subir à un fluide de travail un cycle thermodynamique dit de Rankine, la machine thermique comprenant une turbine (30) de détente de vapeur du fluide de travail,
    - un réservoir (4, 40) de matériau de stockage thermique par chaleur sensible, en tant que moyen de stockage d'une partie de la chaleur évacuée par le circuit de refroidissement du la turbine, le réservoir étant apte à réémettre cette partie de la chaleur dans le circuit (3a) de refroidissement du fluide de travail de la machine thermique lors des heures où la température extérieure est la plus froide afin d'évacuer la chaleur stockée.

3.  Installation (1) selon la revendication 2, la machine thermique étant une machine à cycle organique de Rankine (ORC).

4.  Installation (1) selon l'une des revendications 1 à 3, le réservoir étant un stockage liquide dit « thermocline », c'est-à-dire un réservoir unique dans lequel un liquide est présent avec une zone chaude, une zone froide et une zone intermédiaire de faible volume dans laquelle s'établit une stratification thermique au sein du réservoir.

5.  Installation (1) selon la revendication 4, le stockage liquide thermocline étant stabilisé par un lit de roches.

6.  Installation selon l'une quelconque des revendications précédentes, dans laquelle le fluide caloporteur du circuit de refroidissement est de l'eau.

7.  Installation (1) selon l'une des revendications précédentes, le réservoir étant réalisé sous la forme d'une fosse dans le sol, la fosse étant reliée au circuit du fluide de travail de la machine thermique par au moins un circuit de fluides (3c, 3d).

8.  Installation (1) selon la revendication 7, la fosse étant en forme de pyramide tronquée avec la base agencée le plus profond dans le sol.

9.  Centrale solaire thermodynamique (CSP), comprenant une installation selon l'une quelconque des revendications 2 à 8.

10. Procédé de fonctionnement de l'installation selon l'une des revendications 1 à 8, selon lequel on réalise les étapes suivantes :

    i/ lors de la nuit, échange de chaleur entre le réservoir de stockage thermique (4, 40) et le circuit de refroidissement du fluide de travail (3a) de la machine thermique,
    ii/ lors de la journée, en cas de puissance évacuée par le fluide de travail inférieure à une valeur seuil prédéterminée, isolation fluidique du réservoir,

iii/ lors de la journée, en cas de puissance évacuée par le fluide de travail supérieure à une valeur seuil prédéterminée, échange de chaleur entre le circuit de refroidissement du fluide de travail (3a) de la machine thermique et le réservoir de stockage thermique afin de stocker une partie de la chaleur évacuée par le fluide de travail dans le réservoir (4, 40).

11. Utilisation d'une installation selon l'une quelconque des revendications 1 à 8 dans une région où l'écart de température extérieure entre la nuit et la journée est au moins égal à 10°C.

**Patentansprüche**

1. Anlage (1) zur Umwandlung von Wärme in mechanische Energie, **dadurch gekennzeichnet, dass** sie umfasst:

- eine thermische Maschine (3), die geeignet ist, ein Arbeitsmedium einem thermodynamischen Zyklus zu unterziehen, - einen Behälter (4, 40) mit Material zur sensiblen Wärmespeicherung als Speichermittel für einen Teil der vom Kühlkreislauf des Arbeitsmediums abgeführten Wärme, wobei der Behälter geeignet ist, diesen Teil der Wärme zu Zeiten wieder in den Kühlkreislauf (3a) des Arbeitsmediums der thermischen Maschine abzugeben, in denen die Außentemperatur am tiefsten ist, um die gespeicherte Wärme abzuführen.

2. Anlage (1) nach Anspruch 1, wobei die Anlage eine Anlage zur Umwandlung von Wärme in elektrische Energie ist, umfassend:

- eine thermische Maschine (3), die geeignet ist, ein Arbeitsmedium einem thermodynamischen Zyklus, der Rankine-Zyklus genannt wird, zu unterziehen, wobei die thermische Maschine eine Turbine (30) zur Entspannung von Dampf des Arbeitsmediums umfasst, - einen Behälter (4, 40) mit Material zur sensiblen Wärmespeicherung als Speichermittel für einen Teil der vom Kühlkreislauf der Turbine abgeführten Wärme, wobei der Behälter geeignet ist, diesen Teil der Wärme zu Zeiten wieder in den Kühlkreis (3a) des Arbeitsmediums der thermischen Maschine, in denen die Außentemperatur am tiefsten ist, um die gespeicherte Wärme abzuführen.

3. Anlage (1) nach Anspruch 2, wobei die thermische Maschine eine Maschine mit Organic Rankine Cycle (ORC) ist.

4. Anlage (1) nach einem der Ansprüche 1 bis 3, wobei der Behälter ein Flüssigspeicher ist, der "Thermokline" genannt wird, das heißt ein einziger Behälter, in dem sich eine Flüssigkeit mit einer heißen Zone, einer kalten Zone und einer Zwischenzone mit geringem Volumen befindet, in der es zu einer thermischen Schichtung im Behälter kommt.

5. Anlage (1) nach Anspruch 4, wobei der Thermokline- Flüssigspeicher durch ein Gesteinsbett stabilisiert wird.

6. Anlage nach einem der vorhergehenden Ansprüche, wobei das Wärmeträgermedium des Kühlkreislaufs Wasser ist.

7. Anlage (1) nach einem der vorhergehenden Ansprüche, wobei der Behälter in Form einer Grube im Boden ausgeführt ist, wobei die Grube mit dem Arbeitsmediumkreislauf der thermischen Maschine durch mindestens einen Medienkreislauf (3c, 3d) verbunden ist.

8. Anlage (1) nach Anspruch 7, wobei die Grube die Form eines Pyramidenstumpfes hat, dessen Grundseite im Boden am tiefsten angeordnet ist.

9. Thermodynamisches Solarkraftwerk (CSP) mit einer Anlage nach einem der Ansprüche 2 bis 8.

10. Betriebsverfahren für die Anlage nach einem der Ansprüche 1 bis 8, gemäß dem man die folgenden Schritte ausführt:

i/ nachts Wärmeaustausch zwischen dem Wärmespeicherbehälter (4, 40) und dem Kühlkreislauf des Arbeitsmediums (3a) der thermischen Maschine, ii/ tagsüber, wenn die vom Arbeitsmedium abgeführte Leistung unter einem vorbestimmten Schwellenwert liegt, Medientrennung des Behälters, iii/ tagsüber, wenn die vom Arbeitsmedium abgeführte Leistung über einem vorbestimmten Schwellenwert liegt, Wärmeaustausch zwischen dem Kühlkreislauf des Arbeitsmediums (3a) der thermischen Maschine und dem Wärmespeicherbehälter, um einen Teil der vom Arbeitsmedium abgeführten Wärme im Behälter (4, 40) zu speichern.

11. Verwendung einer Anlage nach einem der Ansprüche 1 bis 8 in einer Region, in der die Außentemperaturdifferenz zwischen Nacht und Tag mindestens 10 °C beträgt.

**Claims**

1. An installation (1) for converting heat into mechanical energy, **characterized in that** it comprises:

   - a thermal machine (3) capable of subjecting a working fluid to a thermodynamic cycle,
   - a reservoir (4, 40) of sensible heat thermal storage material, as means for storing a part of the heat released by the working fluid cooling circuit, the reservoir being capable of returning this part of the heat into the working fluid cooling circuit (3a) of the thermal machine in hours when the outside temperature is coldest in order to release the stored heat.

2. The installation (1) as claimed in claim 1, the installation being an installation for converting heat into electricity comprising:

   - a thermal machine (3) capable of subjecting a working fluid to a so-called Rankine thermodynamic cycle, the thermal machine comprising a working fluid vapor expansion turbine (30),
   - a reservoir (4, 40) of sensible heat thermal storage material, as means for storing a part of the heat released by the cooling circuit of the turbine, the reservoir being capable of returning this part of the heat into the working fluid cooling circuit (3a) of the thermal machine in hours when the outside temperature is coldest in order to release the stored heat.

3. The installation (1) as claimed in claim 2, the thermal machine being an Organic Rankine cycle (ORC) machine.

4. The installation (1) as claimed in one of claims 1 to 3, the reservoir being a so-called "thermocline" liquid storage, that is to say a single reservoir in which a liquid is present with a hot zone, a cold zone and an intermediate zone of small volume in which a thermal laying is established within the reservoir.

5. The installation (1) as claimed in claim 4, the thermocline liquid storage being stabilized by a bed of rocks.

6. The installation as claimed in any one of the preceding claims, in which the heat transfer fluid of the cooling circuit is water.

7. The installation (1) as claimed in one of the preceding claims, the reservoir being produced in the form of a pit in the ground, the pit being linked to the circuit of the working fluid of the thermal machine by at least one fluid circuit (3c, 3d).

8. The installation (1) as claimed in claim 7, the pit being in the form of truncated pyramid with the base arranged deepest in the ground.

9. A thermodynamic solar power plant (CSP), comprising an installation as claimed in any one of claims 2 to 8.

10. A method for operating the installation as claimed in one of claims 1 to 8, according to which the following steps are carried out:

    i/ at night, exchange of heat between the thermal storage reservoir (4, 40) and the working fluid cooling circuit (3a) of the thermal machine,
    ii/ in the day, in case of power release by the working fluid below a predetermined threshold value, fluidic isolation of the reservoir,
    iii/ in the day, in case of power released by the working fluid above a predetermined threshold value, exchange of heat between the working fluid cooling circuit (3a) of the thermal machine and the thermal storage reservoir in order to store a part of the heat released by the working fluid in the reservoir (4, 40).

11. The use of an installation as claimed in any one of claims 1 to 8 in a region where the outside temperature deviation between night and day is at least equal to 10°C.

# Fig.1 (ETAT DE L'ART)

Huile Organique (Therminol 66)  Fluide Frigorigène R245Fa  Eau Glycolée

Vase d'expansion

Champ solaire 2

Champ solaire 1

Stockage

Aérotherme

Évaporateur ORC

Turbine

Condenseur ORC

Aéro

# Fig.2 (ETAT DE L'ART)

Champ Solaire

Stockage

Turbine

Condenseur

Air Extérieur

Chaleur à évacuer

## Fig.3

Champ Solaire 20;21

Stockage

31

30

Turbine

3c 4 40

43

44

Air Extérieur

Condenseur 3b

34

Chaleur à évacuer

3d

1

3

## Fig.4

Champ Solaire 20;21

Stockage

31

30

Turbine

33

3c 4

40

44

42

43

Condenseur 3b

34

Chaleur à évacuer

3d

1

3

## Fig.5

l

H

L

40

**Fig.6**

Legend: P_CS, P élec ORC, P cond ORC, P aéro max, Text

**Fig.7**

Legend: P_CS, P élec ORC, P cond ORC, P aéro max, Text

**Fig.8**

Legend: P_CS, P élec ORC, P cond ORC, P aéro max, Text

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090158736 A
- US 4054246 A

- US 7340899 B1

**Littérature non-brevet citée dans la description**

- **KEVIN DAMERAU.** Costs of reducing water use of concentrating solar power to sustainable levels: Scénarios for North Africa. *Energy Policy,* 2011
- Comparison of alternate cooling technologies for california power plants, Economies, environmental and other tradeoffs. *California Energy Commission,* Février 2002
- Realising the potential of concentrating solar power in Australia. *IT power,* Mai 2012

- **C. MARTIN.** Novel Dry Cooling Technology for Power Plants. *SunShot Concentrating Solar Program Review,* 2013
- **V.GADHAMSHETTY.** « Improving Air-Cooled Condenser Performance in Combined Cycle Power Plants. *Journal of Energy Engineering ASCE,* Août 2006
- **LORENZO PISTOCCHINI.** Feasability Study of $\alpha$n Innovative Dry-Cooling System with Phase-Change Material Storage for CSP Multi-MW Size Power Plant. *Journal of Solar Energy Engineering,* Août 2011